# EUROPÄISCHE PATENTSCHRIFT

(11) **EP 1 448 962 B1**
(45) Veröffentlichungstag und Bekanntmachung des Hinweises auf die Patenterteilung: **04.07.2007**
(21) Anmeldenummer: 02787845.3
(22) Anmeldetag: 27.11.2002
(51) Int. Cl.: G01J 1/42, G01J 5/38, B23K 26/04

(54) **VERFAHREN UND VORRICHTUNG ZUR ANALYSE UND ÜBERWACHUNG DER LICHTINTENSITÄTSVERTEILUNG ÜBER DEN QUERSCHNITT EINES LASERSTRAHLS**
METHOD AND DEVICE FOR ANALYSIS AND MONITORING OF THE LIGHT INTENSITY DISTRIBUTION OVER THE CROSS-SECTION OF A LASER BEAM
PROCEDE ET DISPOSITIF D'ANALYSE ET DE CONTROLE DE LA REPARTITION DE L'INTENSITE LUMINEUSE SUR LA SECTION TRANSVERSALE D'UN RAYON LUMINEUX

(30) Priorität: 30.11.2001 DE 10158859
(43) Veröffentlichungstag der Anmeldung: 25.08.2004
(73) Patentinhaber: Fachhochschule Hildesheim / Holzminden / Göttingen, 31134 Hildesheim (DE)
(72) Erfinder: VIÖL, Wolfgang, 37139 Adelebsen (DE)
(74) Vertreter: Rehberg Hüppe + Partner
(86) Internationale Anmeldenummer: PCT/EP2002/013361
(87) Internationale Veröffentlichungsnummer: WO 2003/046494

(56) Entgegenhaltungen:
- EP-A- 0 893 675
- WO-A-94/10538
- DE-A- 4 006 618
- US-A- 4 173 442
- FISCHER, ROBERT E.; TADIC-GALEB, BILJANA: "Optical System Design" 1. Juni 2000 (2000-06-01) , MCGRAW-HILL XP002240111 ISBN: 0071349162 Seite 308 -Seite 313
- STEFAN BORIK: "Einfluss optischer Komponenten auf die Strahlungsqualität von Hochleistungslasern" 1993, TEUBNER , STUTTGART ISBN: 3-519-06209-7 * Seite 103 - Seite 121 *

## Beschreibung

Die Erfindung bezieht sich auf ein Verfahren und eine Vorrichtung zur Analyse und/oder Überwachung der Lichtintensitätsverteilung über den Querschnitt eines Laserstrahls.

Laserstrahlen gewinnen in den letzten Jahren immer mehr Bedeutung als universales Werkzeug für die Materialbearbeitung. Insbesondere Laserstrahlen eines CO₂-Lasers mit einer Laserleistung im Kilowattbereich werden in der Fertigung zum Schweißen, Schneiden, Bohren, Löten, Beschriften, zur Oberflächenbehandlung usw. eingesetzt. Dabei ist es wichtig, dass die Lichtintensitätsverteilung und die Lage des Laserstrahls auch während der Materialbearbeitung überwacht werden. Im Rahmen der vorliegenden Beschreibung wird die Überwachung der Lage eines Laserstrahls als Spezialfall der Überwachung der Lichtintensitätsverteilung über den Querschnitt des Laserstrahls nicht immer speziell hervorgehoben, weil eine Lageänderung nichts anderes bedeutet, als dass sich der Schwerpunkt und/oder die Grenzen der Lichtintensitätsverteilung des Laserstrahls verschieben.

Aus der US 5 694 209 A ist es bekannt, den Querschnitt eines Laserstrahls mit einem kleinflächigen reflektierenden Element abzutasten, wobei das aus dem Laserstrahl herausreflektierte Laserlicht analysiert wird. Der hierzu zu betreibende mechanische Aufwand ist immens. Darüberhinaus wird die Strahlqualität des Laserstrahls durch seine Abtastung mit dem reflektierenden Element verschlechtert. Auch die Analyse der aus dem Laserstrahl herausreflektierten Lichtintensitäten ist nicht unkritisch, wenn es sich beispielsweise um den Laserstrahl eines CO₂-Lasers handelt, dessen Wellenlänge im Infrarotbereich liegt.

Aus der DE 40 06 618 A1 ist es bekannt, zur Analyse und/oder Überwachung der Lichtintensitätsverteilung über den Querschnitt eines Laserstrahls einen den Laserstrahl umlenkenden Laserspiegel so in definierter Geometrie und in definiertem Abstand mit Riefen zu versehen, dass ein auf die Riefen auftreffender Anteil des Laserstrahls die Oberfläche des Laserspiegels als Messstrahlung verläßt, wobei sich die von den Riefen ausgehenden Teilwellen in wenigstens einer Richtung verstärkend überlagern und somit wenigstens einen Messstrahl bilden, der von einem Detektor erfasst wird. Gleichzeitig wird der auf die ebenen Flächen zwischen den Riefen auftreffende Anteil des Laserstrahls geometrisch-optisch als Hauptstrahl reflektiert. Wenn die Gesamtfläche aller Riefen sehr klein im Verhältnis zur gesamten Spiegeloberfläche ist, wird so nur ein sehr begrenzter Anteil der Lichtintensität des Laserstrahls zu dem Detektor hin ausgekoppelt. Der praktische Verlust an Laserleistung ist aber nicht unerheblich. Hinzu kommen der Aufwand für die spezielle Ausbildung des Laserspiegels und die Schwierigkeiten, das ausgekoppelte Laserlicht bezüglich seiner Intensitätsverteilung zu analysieren, insbesondere, wenn es sich um infrarotes Laserlicht beispielsweise aus einem Laserstrahl eines CO₂-Lasers handelt.

Als Stand der Technik ist in der DE 40 06 618 A1 auch eine Möglichkeit zur Analyse und/oder Überwachung der Lichtintensitätsverteilung über den Querschnitt eines Laserstrahls beschrieben, bei der die Restrauhigkeit einer an sich ebenen Spiegeloberfläche eines den Laserstrahl reflektierenden Laserspiegels ausgenutzt wird, um Streulicht zu gewinnen, das von Detektoren erfasst wird. Die Rauhigkeit von heutzutage eingesetzten Laserspiegeln für Laserstrahlen beträgt aber typischerweise nur noch ein Tausendstel der Laserwellenlänge. Damit besitzen die heutigen Laserspiegel eine Restrauhigkeit, die weit unter dem Wert liegt, die die Laserspiegel vor 10 bis 20 Jahren, d.h. zum Anmeldezeitpunkt der DE 40 06 618 A1 besaßen. Damals war bei Laserspiegeln für Laserstrahlen eine Restrauhigkeit von ein Zehntel bis ein Zwanzigstel der Laserwellenlänge üblich. Deshalb dürfte ausgehend von einem heutigen Laserspiegel im Gegensatz zu früher kein nennenswertes Streusignal mehr zu erwarten sein. Selbst wenn doch ein solches Streusignal gegeben ist, liegt es im Fall von infraroten Laserstrahlen ebenfalls im infraroten Bereich und ist entsprechend nur mit hohem Aufwand analysierbar.

Aus der EP-A-0 893 675 ist ein Sensorelement bekannt, das aus einer Scheibe aus einem Material mit einem hohen thermischen Ausdehnungskoeffizienten und einer geringen thermischen Leitfähigkeit besteht, die auf ihrer einen Seite mit einer absorbierenden und auf ihrer anderen Seite mit einer reflektierenden Beschichtung versehen ist. Z. B. kann die Scheibe aus akrylischem Kunststoff bestehen und wenige Millimeter dick sein. Eine auf die Seite der Scheibe mit der absorbierenden Beschichtung einfallende Strahlung wird von der absorbierenden Beschichtung in Wärme umgewandelt, die zu einer räumlichen Deformation der Scheibe im Sinne einer Durchbiegung führt, wobei die Durchbiegung um ein Vielfaches größer ist als die ursächlichen lokalen Wärmeausdehnungen des Materials der Scheibe. Die Deformation der Scheibe wird interferometrisch unter Verwendung der reflektierenden Beschichtung der Scheibe auf ihrer anderen Seite als erfasst, wobei ein Interferenzmuster eines Messlichtstrahls von einem Laser zwischen der reflektierenden Oberfläche und einer Referenzfläche beobachtet wird.

Aus Stefan Borik: "Einfluss optischer Komponenten auf die Strahlungsqualität von Hochleistungslasern" 1993, Teubner Stuttgart ISBN: 3-519-06209-7 ist ein Verfahren zur Ermittlung der Planizität von Laserspiegeln bekannt, die mit einem Laserstrahl beaufschlagt werden. Auftretende Abweichungen von der gewünschten Planizität des Laserspiegels werden interferometrisch erfasst, wobei ein Interferenzmuster eines Messlichtstrahls zwischen dem Laserspiegel und einer Referenzfläche beobachtet wird.

Der Erfindung liegt die Aufgabe zugrunde, ein Verfahren und eine Vorrichtung zur Analyse und/oder Überwachung der Lichtintensitätsverteilung über den Querschnitt eines Laserstrahls aufzuzeigen, die auch dann mit geringem apparativen Aufwand realisierbar sind, wenn die Lichtintensitätsverteilung von infrarotem Laserlicht beispielsweise eines Laserstrahls eines CO₂-Lasers erfasst werden soll, und die gleichzeitig eine Deformation des Laserstrahls über seinen Querschnitt weitestmöglich vermeiden.

Erfindungsgemäß wird diese Aufgabe bei einem Verfahren zur Analyse und/oder Überwachung der Lichtintensitätsverteilung durch die Schritte gelöst: Umlenken des Laserstrahls mit einem Laserspiegel und interferometrisches Erfassen von lokalen Wärmeausdehnungen des Laserspiegels aufgrund der auf den Laserspiegel einfallenden unterschiedlichen Lichtintensitäten.

In der Materialbearbeitung lassen die Anforderungen an Laserspiegel eine thermische Verformung von 1/20 der Laserwellenlänge zu. Die CO₂-Laserstrahlung hat beispielsweise eine Wellenlänge von 10,6 µm, So darf sich die Spiegeloberfläche eines Laserspiegels um maximal 500 nm verformen. Diese Verformung kann interferometrisch erfasst werden. Dabei geht es konkret um eine lichtinterferometrische Erfassung unter Verwendung eines kohärenten Messlichtstrahls, der vorzugsweise eine geringere Wellenlänge aufweist als die Laserwellenlänge des Laserstrahls. Geeignet ist beispielsweise ein Messlichtstrahl, wie er von einem HeNe-Laser zur Verfügung gestellt wird. So sind Auflösungen bei der interferometrischen Erfassung der lokalen Wärmeausdehnungen an der Spiegeloberfläche des Laserspiegels von ca. 30 nm möglich.

Der Messlichtstrahl wird bei dem Verfahren vorzugsweise senkrecht auf den Laserspiegel gerichtet, so dass er auf sich selbst zurückreflektiert wird. Auf diese Weise kann ein Interferenzmuster ausgebildet werden, das besonders gut zwischen dem Laserspiegel und einer Referenzfläche zu beobachten ist. Dabei sind die Effekte durch unterschiedliche Wärmeausdehnungen an der Spiegeloberfläche des Laserspiegels besonders gut zu erkennen, wenn die Referenzfläche eine definierte Abstandsvariation zu dem Laserspiegel aufweist, so dass ohne die lokalen Wärmeausdehnungen ein gleichmäßiges Interferenzmuster beispielsweise bestehend aus parallelen Streifen zu beobachten ist. Durch unterschiedlich starke lokale Wärmeausdehnungen wird dieses Interferenzmuster charakteristisch deformiert.

Es versteht sich, dass bei dem neuen Verfahren die Lichtintensität des Messlichtstrahls um Größenordnungen kleiner sein muss als die Lichtintensität des Laserstrahls, damit die Wärmeausdehnungen des Laserspiegels aufgrund der auf den Laserspiegel einfallenden unterschiedlichen Lichtintensitäten des Laserstrahls der dominierende Messeffekt sind. Für ein interferometrisches Erfassen der lokalen Wärmeausdehnungen sind aber auch Lichtintensitäten im Milliwatt-Bereich ausreichend, die um viele Größenordnungen kleiner sind als die typische Größenordnung der Gesamtlichtintensität eines Laserstrahls zur Materialbearbeitung von 1 kW.

Damit der gewünschte Messeffekt bei dem neuen Verfahren ausreichend groß ist, sind bei der Ausbildung des Laserspiegels gewisse Aspekte zu beachten. So sollte die Absorption der Lichtintensitäten des Laserstrahls bei dessen Umlenkung im Bereich weniger Prozent liegen. Die Wärmeausdehnungen senkrecht zur Spiegeloberfläche sollten im Bereich weniger 100 nm liegen; und eine Wärmeleitfähigkeit in der Ebene der Spiegloberfläche sollte so sein, dass sich eine Ortsauflösung der Wärmeausdehnungen in der Spiegeloberfläche von etwa 1 mm ergibt. Dies wird erreicht, wenn der Laserspiegel so ausgebildet wird, dass er bei einer Lichtabsorption von weniger als 5 % an seiner Spiegeloberfläche eine effektive Wärmeleitfähigkeit von etwa 100 bis 200 W/mK und einen thermischen Ausdehnungskoeffizient von etwa 10 bis 20 * 10⁻⁶ 1/K aufweist.

Konkret kann der Laserspiegel so ausgebildet werden, dass er einen metallischen Schichtaufbau mit einem massiven Grundkörper zur Wärmeableitung, einer darauf angeordneten Ausdehnschicht mit einer Dicke in der Größenordnung von 1 mm und einer darauf angeordneten dünnen Reflexionsbeschichtung aufweist. Die Materialien der drei Bestandteile des Schichtaufbaus können dabei auf ihre jeweilige Aufgabe bezogen optimiert werden, ohne dass hieraus jeweils Nachteile in Bezug auf andere Teilaspekte der Funktion des Laserspiegels resultieren.

Eine Vorrichtung zur Analyse und/oder Überwachung der Lichtintensitätsverteilung über den Querschnitt eines Laserstrahls weist erfindungsgemäß die Merkmale des Patentanspruchs 8 auf. Das Interferometer weist eine Messlichtquelle auf, die ein senkrecht auf den Laserspiegel gerichteten kohärenten Messlichtstrahl abgibt, der auf sich selbst zurückreflektiert wird.

Vorzugsweise ist die Wellenlänge des Messlichtstrahls kürzer als die Laserwellenlänge des Laserstrahls. Immer muss die Lichtintensität des Messlichtstrahls um Größenordnungen kleiner als diejenige des Laserstrahls sein.

In dem Messlichtstrahl kann ein Strahlteiler angeordnet sein, um ein Interferenzmuster des Messlichtstrahls zwischen dem Laserspiegel und einer zwischen dem Laserspiegel und dem Strahlteiler angeordneten Referenzfläche mit einer Kamera zu beobachten. Bei der Kamera kann es sich um einen CCD-Detektor handeln. Wichtig ist es dabei nicht, dass der CCD-Detektor absolute Lichtintensitäten in dem Interferenzmuster registriert. Vielmehr dient er nur zum Beobachten von Veränderungen des Interferenzmusters.

Dies gilt insbesondere, wenn die Referenzfläche an einer Referenzplatte vorgesehen ist, die eine definierte Abstandsvariation zu dem Laserspiegel aufweist.

Damit der Laserspiegel so ausgebildet ist, dass er bei einer Lichtabsorption von weniger als 5 % an seiner Spiegeloberfläche eine effektive Wärmeleitfähigkeit von 100 bis 200 W/mK und einen thermischen Ausdehnungskoeffizient von 10 bis 20 * 10⁻⁶ l/K aufweist, kann er beispielsweise einen Grundkörper aus Kupfer aufweisen, der mit einer ca. 1 mm dicken Ausdehnschicht aus Blei belegt ist, wobei die Bleischicht zur Verbesserung ihrer Reflexion mit Gold beschichtet, d. h. vergoldet ist. Die Reflexionsbeschichtung beeinflusst die Wärmeleitung und Wärmeausdehnung des Laserspiegels an der Spiegeloberfläche aufgrund ihrer geringen Dicke nicht. Durch die angegebene Materialkombination wird ein sehr geringer Absorptionskoeffizient für die Laserstrahlung im Bereich von 1 % realisiert. Die Wärmeleitfähigkeit und der thermische Ausdehnungskoeffizient dieser Kombination liegen so, dass eine ausreichend hohe lokale Auflösung bei einem ausreichend großen Messeffekt gegeben sind.

Die Erfindung wird im folgenden anhand eines Ausführungsbeispiels näher erläutert und beschrieben, dabei zeigt
- Fig. 1: die prinzipielle Anordnung der neuen Vorrichtung,
- Fig. 2: ein bei der Anordnung gemäß Fig. 1 ohne Laserstrahl entstehendes Interferenzmuster und
- Fig. 3: ein bei der Anordnung gemäß Fig. 1 mit Laserstrahl entstehendes Interferenzmuster.

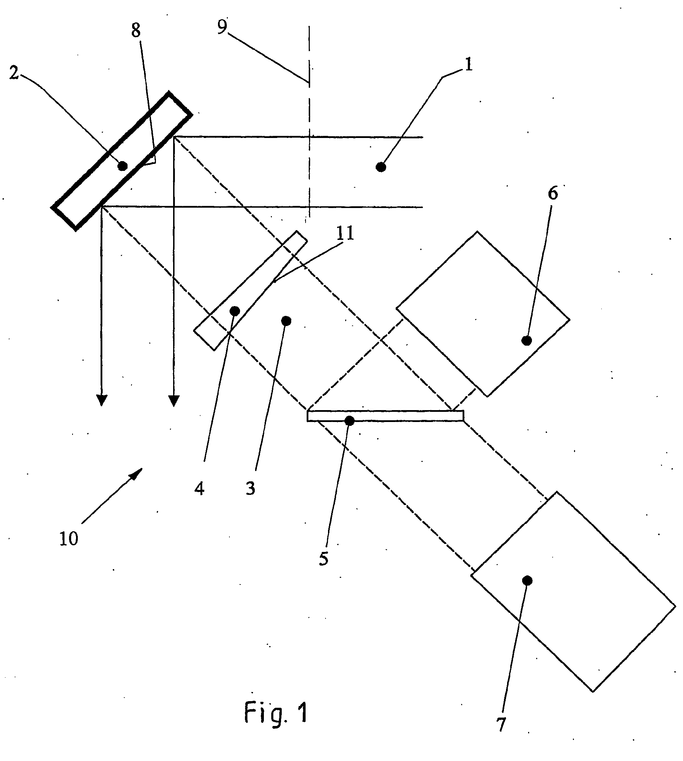

In Fig. 1 ist dargestellt, wie ein Laserstrahl 1 von einem Laserspiegel 2 umgelenkt wird. Eine derartige Umlenkung eines Laserstrahls 1 erfolgt fasst immer bei der Materialbearbeitung mit Hilfe eines Laserstrahls, um den Laserstrahl in einen gewünschten Bearbeitungsbereich zu richten. Hier ist der Laserspiegel 2 gleichzeitig Teil einer Vorrichtung 10 zur Analyse und/oder Überwachung der Lichtintensitätsverteilung über den Querschnitt des Laserstrahls 1. Genauer wird hier die Lichtintensitätsverteilung des Laserstrahls 1 über eine Spiegeloberfläche des Laserspiegels 2 erfasst. Diese Lichtintensitätsverteilung kann aber ohne weiteres in eine Lichtintensitätsverteilung transformiert werden, wie sie beispielsweise über einen gedachten Querschnitt 9 durch den Laserstrahl 1 vorliegt. Zu der hier erfassten Lichtintensitätsverteilung des Laserstrahls 1 gehört auch seine relative Lage zu der Spiegeloberfläche 8 bzw. dem Querschnitt 9. Weitere Bestandteile der Vorrichtung 10 neben dem Laserspiegel 2 sind eine Messlichtquelle 7, ein Strahlteiler 5, eine Referenzplatte 4 und eine Kamera 6. Die Messlichtquelle 7 ist hier ein HeNe-Laser und gibt einen kohärenten Messlichtstrahl 3 ab. Der Messlichtstrahl 3 tritt ohne Umlenkung durch den Strahlteiler 3 hindurch. Er gelangt dann durch die Referenzplatte 4 auf die Spiegeloberfläche 8. Von dort wird er auf sich selbst zurückreflektiert und bildet zwischen einer Referenzfläche 11, bei der es sich um die dem Strahlteiler 5 zugekehrte Oberfläche der keilförmigen Referenzplatte 4 handelt und der Oberfläche 8 ein Interferenzmuster aus. Dieses Interferenzmuster wird mit der Kamera 6 beobachtet, deren Strahlengang über den Strahlteiler 5 auf die Referenzplatte 5 umgelenkt wird. Das von der Kamera 6 registrierte Interferenzmuster ist bei einer absolut ebenen Spiegeloberfläche 8 ein Streifenmuster aufgrund der Keilform der Referenzplatte 4. Sobald sich jedoch der Laserspiegel 2 an der Spiegeloberfläche 8 durch unterschiedliche Lichtintensitäten über den Querschnitt 9 unterschiedlich stark erwärmt, so dass auch unterschiedlich starke Wärmeausdehnungen vorliegen, wird dieses Interferenzmuster in einer für die Lichtintensitätsverteilung über den Querschnitt 9 charakteristischen Weise deformiert. Dies wird von der Kamera 6 registriert. Die Kamera 6, bei der es sich um ein CCD-Array handeln kann, ist so in der Lage, insbesondere Inhomogenitäten in der Lichtintensitätsverteilung über den Querschnitt 9 und Veränderungen der Lichtintensitätsverteilung festzustellen. Durch eine Integration der registrierten Veränderungen des Interferenzmusters können auch absolute Lichtintensitäten ermittelt werden. Ebenso kann die Lage des Laserstrahls 1 relativ zu dem Querschnitt 9 sowohl bezüglich seiner Grenzen als auch bezüglich des Schwerpunkts seiner Lichtintensitätsverteilung ermittelt werden. Dies ist mit vergleichsweise geringem apparativem Aufwand und insbesondere mit einer das Messergebnis in keiner Weise gefährdenden Lichtintensität des Messlichtstrahls 3 möglich.

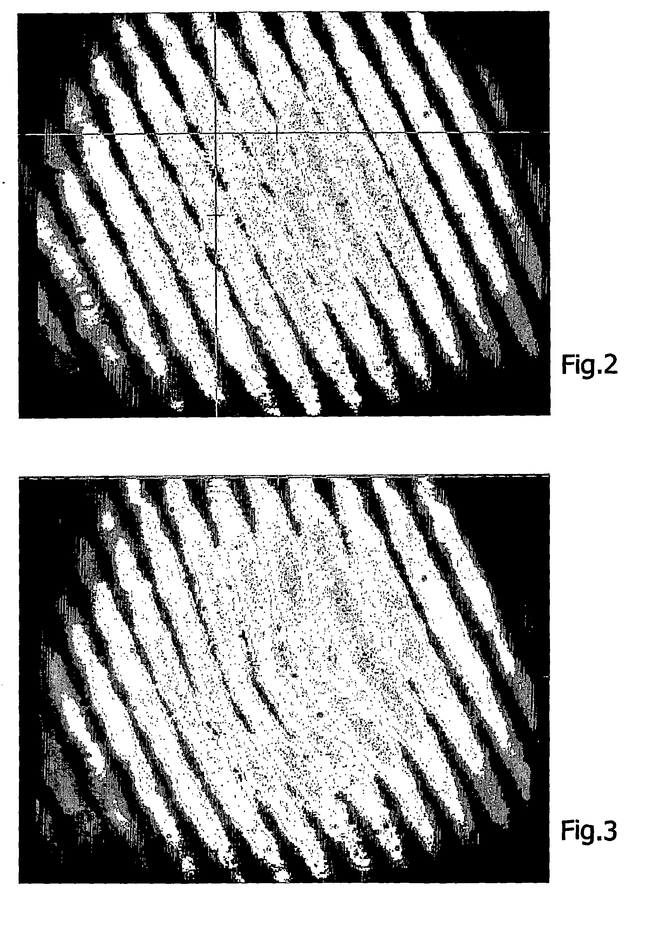

Fig. 2 zeigt als Beispiel eines Interferenzmusters, das mit der Kamera 6 gemäß Fig. 1 aufgezeichnet wird, sog. Fizeau-Streifen. Die Fizeau-Streifen verlaufen hier geradlinig und parallel zueinander, was einer ebenen Spiegeloberfläche 8 entspricht. Mit anderen Worten war der Laserstrahl 1 bei der Aufnahme des Interferenzmusters gemäß Fig. 2 ausgeschaltet.

Demgegenüber ist das Muster der Fizeau-Streifen gemäß Fig. 3 im Zentrum deformiert, da in diesem Fall der Laserstrahl 1 dort den Laserspiegel 2 erwärmt hat, was zu einer lokalen Wärmeausdehnung des Laserspiegels 2 an der Spiegeloberfläche 8 geführt hat. Wenn beispielsweise das Interferenzmuster der Fizeau-Streifen gemäß Fig. 3 einer gewünschten Form, d.h. einer gewünschten Intensitätsverteilung über den Querschnitt des Laserstrahls 1 entspricht, reicht es aus, mit der Kamera 6 eine Veränderung dieses Interferenzmusters als Zeichen dafür zu erkennen, dass die gewünschte Intensitätsverteilung nicht mehr gegeben ist. Entsprechend kann beispielsweise eine Materialbearbeitung nur dann freigegeben werden, wenn die Kamera 6 das spezielle Interferenzmuster, das dem gewünschten Wahlquerschnitt entspricht, erkennt.

### BEZUGSZEICHENLISTE

- 1 -: Laserstrahl
- 2 -: Laserspiegel
- 3 -: Messlichtstrahl
- 4 -: Referenzplatte
- 5 -: Strahlteiler
- 6 -: Kamera
- 7 -: Messlichtquelle
- 8 -: Spiegeloberfläche
- 9 -: Querschnitt
- 10 -: Vorrichtung

- 11 -: Referenzfläche

## Patentansprüche

1. Verfahren zur Analyse und/oder Überwachung der Lichtintensitätsverteilung über den Querschnitt (9) eines Laserstrahl (1), mit den Schritten:
- Umlenken des Laserstrahls (1) mit einem Laserspiegel (2) und
- interferometrisches Erfassen von lokalen Wärmeausdehnungen des Laserspiegels (2) aufgrund der auf den Laserspiegel (2) einfallenden unterschiedlichen Lichtintensitäten.

2. Verfahren nach Anspruch 1, **dadurch gekennzeichnet, dass** zum interferometrischen Erfassen der lokalen Wärmeausdehnungen ein kohärenter Messlichtstrahl (3) senkrecht auf den Laserspiegel (2) gerichtet wird, so dass er auf sich selbst zurückreflektiert wird.

3. Verfahren nach Anspruch 2, **dadurch gekennzeichnet, dass** ein Interferenzmuster des Messlichtstrahls (3) zwischen dem Laserspiegel (2) und einer Referenzfläche (11) beobachtet wird.

4. Verfahren nach Anspruch 3, **dadurch gekennzeichnet, dass** die Referenzfläche (11) eine definierte Abstandsvariation zu dem Laserspiegel (2) aufweist.

5. Verfahren nach einem der Ansprüche 1 bis 4, **dadurch gekennzeichnet, dass** der Laserspiegel (2) so ausgebildet wird, dass er bei einer Lichtabsorption von weniger als 5 % an seiner Spiegeloberfläche (8) eine effektive Wärmeleitfähigkeit von 100 bis 200 W/mK und einen thermischen Ausdehnungskoeffizient von 10 bis 20* 10⁻⁶ 1/K aufweist.

6. Verfahren nach Anspruch 5, **dadurch gekennzeichnet, dass** der Laserspiegel (2) so ausgebildet wird, dass er einen metallischen Schichtaufbau mit einem massiven Grundkörper zur Wärmeableitung, einer darauf angeordneten Ausdehnschicht und einer darauf angeordneten Reflexionsbeschichtung aufweist.

7. Verfahren nach Anspruch 3, **dadurch gekennzeichnet, dass** ein Strahlteiler (5) in dem Messlichtstrahl (3) angeordnet wird, um das Interferenzmuster des Messlichtstrahls (3) zwischen dem Laserspiegel (2) und der zwischen dem Laserspiegel (2) und dem Strahlteiler (5) angeordneten Referenzfläche (11) mit einer Kamera (6) zu beobachten.

8. Vorrichtung zur Analyse und/oder Überwachung der Lichtintensitätsverteilung über den Querschnitt eines Laserstrahl (1), mit einem den Laserstrahl (1) umlenkenden Laserspiegel (2) und mit einem Interferometer zum Erfassen von lokalen Wärmeausdehnungen des Laserspiegels (2) aufgrund der auf den Laserspiegel (2) einfallenden unterschiedlichen Lichtintensitäten, **dadurch gekennzeichnet dass** der Laserspiegel (2) so ausgebildet ist, dass er bei einer Lichtabsorption von weniger als 5% an seiner Spiegeloberfläche (8) eine effektive Wärmeleitfähigkeit von 100 bis 200 W/mK und einen thermischen Ausdehnungskoeffizient von 10 bis 20 * 10⁻⁶ 1/K aufweist.

9. Vorrichtung nach Anspruch 8, **dadurch gekennzeichnet, dass** der Laserspiegel (2) einen metallischen Schichtaufbau mit einem massiven Grundkörper zur Wärmeableitung, einer darauf angeordneten Ausdehnschicht und einer darauf angeordneten Reflexionsbeschichtung aufweist.

10. Vorrichtung nach Anspruch 9, **dadurch gekennzeichnet, dass** der massive Grundkörper aus Kupfer und die darauf angeordnete Ausdehnschicht aus Blei besteht.

## Claims

1. A method for analysis and/or monitoring the light intensity distribution over the cross-section (9) of a laser beam (1) comprising the steps of:
- reflecting the laser beam (1) with a laser mirror (2) and
- interferometrically detecting local thermal expansion of the laser mirror (2) caused by different light intensities incident on the laser mirror (2).

2. The method of claim 1, **characterized in that** a coherent measurement light beam (3) is perpendicularly directed towards the laser mirror (2) for interferometrically detecting the local thermal expansions so that the measurement light beam (3) is reflected onto itself.

3. The method of claim 2, **characterized in that** an interference pattern of the measurement light beam (3) between the laser mirror (2) and a reference surface (11) is observed.

4. The method of claim 3, **characterized in, that** the reference surface (11) comprises a defined variation in distance to the laser mirror (2).

5. The method of any of the claims 1 to 4, **characterized in that** the laser mirror (2) is designed in such way that with a light absorption of less than 5 % it has an effective thermal conductivity of 100 to 200 W/mk and a thermal expansion coefficient of 10 to 20 * 10⁻⁶ 1/K at its mirror surface (8).

6. The method of claim 5, **characterized in that** the laser mirror (2) is designed in such a way that it comprises a metal layer structure having a massive main body for carrying off heat, an expansion layer arranged on top of the main body and a reflection coating arranged on top of the expansion layer.

7. The method of claim 3, **characterized in that** a beam splitter (5) is arranged in the measurement light beam (3) to observe the interference pattern of the measurement light beam (3) between the laser mirror (2) and the reference surface (11) arranged between the laser mirror (2) and the beam splitter (5) with a camera (6).

8. A device for analysis and/or monitoring the light intensity distribution over the cross-section of a laser beam (1), comprising a laser mirror (2) reflecting the laser beam (1), and an interferometer for detecting local thermal expansions of the laser mirror (2) caused by different light intensities incident on the laser mirror (2), **characterized in that** the laser mirror (2) is designed in such a way that it has at its mirror surface (8) an effective thermal conductivity of 100 to 200 W/mK and a thermal expansion coefficient of 10 to 20 *10⁻⁶ 1/K with a light absorption of less than 5 %.

9. The device of claim 8, **characterized in that** the laser mirror (2) has a metal layer structure comprising a massive main body for carrying off heat, an expansion layer arranged on top of the main body and a reflection coating arranged on top of the expansion layer.

10. The device of claim 9, **characterized in that** the massive main body is made of copper, and the expansion layer arranged thereon is made of lead.

## Revendications

1. Procédé pour l'analyse et/ou le contrôle de la répartition de l'intensité lumineuse sur la section transversale (9) d'un faisceau laser (1), comprenant les étapes suivantes :
- déviation du faisceau laser (1) avec un miroir de laser (2) et
- enregistrement par interférométrie de dilatations thermiques locales du miroir du laser (2) sur la base des différentes intensités lumineuses arrivant sur le miroir du laser (2).

2. Procédé selon la revendication 1, **caractérisé en ce que**, pour l'enregistrement interférométrique des dilatations thermiques locales, un faisceau de lumière de mesure (3) cohérent est dirigé perpendiculairement au miroir du laser (2), de sorte qu'il est réfléchi sur lui-même.

3. Procédé selon la revendication 2, **caractérisé en ce qu'**un modèle d'interférence du faisceau de lumière de mesure (3) est observé entre le miroir du laser (2) et une surface de référence (11).

4. Procédé selon la revendication 3, **caractérisé en ce que** la surface de référence (11) présente une variation de distance définie par rapport au miroir du laser (2).

5. Procédé selon l'une quelconque des revendications 1 à 4, **caractérisé en ce que** le miroir de laser (2) est réalisé de telle sorte que, pour une absorption de lumière inférieure à 5 % sur sa surface de miroir (8), il présente une conductibilité thermique effective de 100 à 200 W/mK et un coefficient de dilatation thermique de 10 à 20 * 10⁻⁶ 1/K.

6. Procédé selon la revendication 5, **caractérisé en ce que** le miroir du laser (2) est conçu de telle sorte qu'il présente une structure de couche métallique avec un corps de base massif pour l'évacuation de chaleur, une couche de dilatation disposée dessus et une couche de réflexion disposée dessus.

7. Procédé selon la revendication 3, **caractérisé en ce qu'**un diviseur de faisceau (1) est disposé dans le faisceau de lumière de mesure (3) afin d'observer avec un appareil photo (6) le modèle d'interférence du faisceau de lumière de mesure (3) entre le miroir du laser (2) et la surface de référence (11) disposée entre le miroir du laser (2) et le diviseur de faisceau (5).

8. Dispositif pour l'analyse et/ou le contrôle de la répartition de l'intensité de lumière sur la section transversale d'un faisceau laser (1), avec un miroir de laser (2) déviant le faisceau laser (1) et avec un interféromètre pour l'enregistrement de dilatations thermiques locales du miroir du laser (2) sur la base des différentes intensités lumineuses arrivant sur le miroir du laser (2), **caractérisé en ce que** le miroir du laser (2) est réalisé de telle sorte que, lors d'une absorption de lumière de moins de 5 % sur sa surface de miroir (8), il présente une conductibilité thermique effective de 100 à 200 W/mK et un coefficient de dilatation thermique de 10 à 20 * 10⁻⁶ 1/K.

9. Dispositif selon la revendication 8, **caractérisé en ce que** le miroir de laser (2) présente une structure de couche métallique avec un corps de base massif pour l'évacuation de la chaleur, une couche de dilatation disposée dessus et un revêtement de réflexion disposé dessus.

10. Dispositif selon la revendication 9, **caractérisé en ce que** le corps de base massif est à base de cuivre et la couche de dilatation disposée dessus est à base de plomb.
